Europäisches Patentamt

European Patent Office

Office européen des brevets

(11) Publication number: **0 157 552**
**B1**

(12) **EUROPEAN PATENT SPECIFICATION**

(45) Date of publication of patent specification: **08.03.89**

(21) Application number: **85301982.6**

(22) Date of filing: **22.03.85**

(51) Int. Cl.⁴: **C 02 F 5/12**

(54) Carboxylic/sulfonic/quaternary ammonium polymers for use as scale and corrosion inhibitors.

(30) Priority: **26.03.84 US 592769**

(43) Date of publication of application:
**09.10.85 Bulletin 85/41**

(45) Publication of the grant of the patent:
**08.03.89 Bulletin 89/10**

(84) Designated Contracting States:
**AT BE CH DE FR GB IT LI LU NL SE**

(56) References cited:
**EP-A-0 082 657**
**GB-A-2 054 548**
**US-A-3 752 760**
**US-A-3 898 037**

(73) Proprietor: **CALGON CORPORATION**
**Route 60-Campbell's Run Road**
**Robinson Township Pennsylvania 15205 (US)**

(72) Inventor: **Matz, Gary F.**
**47 Franklin Avenue**
**Revere Massachusetts 02151 (US)**

(74) Representative: **Crampton, Keith John Allen**
**et al**
**D YOUNG & CO 10 Staple Inn**
**London WC1V 7RD (GB)**

Courier Press, Leamington Spa, England.

EP 0 157 552 B1

**Description**

Most industrial waters contain alkaline-earth metal cations, such as those of calcium, barium and magnesium, and several anions such as bicarbonate, carbonate, sulfate, oxalate, phosphate, silicate and fluoride. When combinations of these anions and cations are present in concentrations that cause the solubility products of the corresponding salts to be exceeded, precipitates form until these concentrations are no longer exceeded. For example, when the concentrations of calcium ion and carbonate ion are such that the solubility product of calcium carbonate is exceeded, a solid phase of calcium carbonate will form.

Solubility product concentrations are exceeded for various reasons, such as partial evaporation of the water phase, change in pH, pressure or temperature, and the introduction of additional ions that form insoluble compounds with the ions already present in the solution.

As these reaction products are precipitated on surfaces of the water-carrying system, they accumulate as scale or deposits. This accumulation prevents effective heat transfer, interferes with fluid flow, facilitates corrosive processes, and harbours bacteria. Scale is an expensive problem in many industrial water systems causing delays and shutdowns for cleaning and removal.

The precipitation of scale-forming compounds can be prevented by inactivating their cations with chelating or sequestering agents, so that the solubility product is not exceeded. Generally, this requires large quantities of chelating or sequestering agent as cation, since chelation is a stoichiometric reaction, and these amounts are not always desirable or economical.

Almost 50 years ago, it was discovered that certain inorganic polyphosphates would prevent such precipitation when added in amounts far less than the concentrations needed for sequestering or chelating. The term "polyphosphates" means phosphates having a molar ratio of metal oxide:$P_2O_5$ in the range from 1:1 to 2:1.

When a precipitation inhibitor is present in a potentially scale-forming system at a markedly lower concentration than that required for stoichiometric binding of the scale-forming cation, it is said to be present in "threshold" amounts. See for example, Hatch and Rice, "Industrial Engineering Chemistry", Vol. 31, pages 51 to 53 (Jan. 1939); Reitemeier and Buehrer, "Journal of Physical Chemistry", Vol. 44, No. 5, pages 535 to 536 (May 1940); and US Patent Specifications US—A—2,358,222 and 2,539,305.

Usually, sequestering takes place at a weight ratio of threshold active compound to scale-forming cation components of greater than 10:1, depending on the anion components in the water. Threshold inhibition generally takes place at a weight ratio of threshold active compound to scale-forming cation components of less than 0.5:1.0.

Certain water-soluble polymers, including groups derived from acrylamide and acrylic acid, have been used to condition water containing scale-forming compounds. As for example, see US Patent Specifications US—A—2,783,200; 3,514,476; 2,980,610; 3,285,886; 3,463,730 and 3,518,204.

US Patent Specifications US—A—3,928,196 discloses the use of a copolymer of 2-acrylamido-2-methylpropylsulfonic acid and acrylic acid in inhibiting scale.

European Patent Specification EP—A—0 082 657 discloses polyampholytes which are prepared from cationic-containing monomer (e.g. a quaternary ammonium compound) and anionic-containing monomers such as unsaturated carboxylic and sulfonic acids. Such polyampholytes having an intrinsic viscosity in the range of 0.05 to 2.8 are utilised for scale and corrosion inhibition in aqueous systems. See in particular pages 6 to 8 and page 12.

US Patent Specification US—A—3,752,760 discloses water-soluble copolymers prepared from an unsaturated quaternary ammonium compound which compound may contain a sulfonic group and an unsaturated carboxylic acid. These polymers are used for controlling the deposition of alluvium and silt in water systems (see columns 1 and 2).

The present invention provides a method of inhibiting corrosion and the formation and deposition of scale in aqueous systems, that comprises adding to the system at least 0.1 ppm of a water-soluble polymer having an intrinsic viscosity of 0.05 to 2.5 dl/g, (0.005 to 0.25 $m^3$/Kg) prepared from:

(a) 50 to 90% by weight of an unsaturated carboxylic acid or its salt or a mixture of such carboxylic acid compounds;

(b) 5 to 40% by weight of an unsaturated sulfonic acid or its salt or a mixture of such sulfonic acid compounds; and

(c) 5 to 40% by weight of an unsaturated quaternary ammonium compound or a mixture of such compounds.

The amount of polymer added will usually be in the range 0.1 to 100 ppm, preferably 0.1 to 25 ppm.

The invention also provides a water-soluble polymer having an intrinsic viscosity of 0.05 to 2.5 dl/g (0.005 to 0.25 $m^3$/Kg) prepared from:

(a) 50 to 90% by weight of an unsaturated carboxylic compound that is acrylic acid, methacrylic acid, a salt of either or a mixture of two or more such compounds;

(b) 5 to 40% by weight of an unsaturated sulfonic compound that is 2-acrylamido-2-methylpropylsulfonic acid, 2-methacrylamide-2-methylpropylsulfonic acid, a salt of either or a mixture of two or more such compounds; and

(c) 5 to 40% by weight of dimethyl diallyl ammonium chloride or diethyl diallyl ammonium chloride or a mixture of them.

In the method and compositions of the invention, the amounts are preferably:

(a) 60 to 75% by weight of the carboxylic acid or salt;

(b) 5 to 25% by weight of the sulfonic acid or salt; and

(c) 10 to 25% by weight of the quaternary ammonium compound.

The phrase "inhibiting the formation and deposition" includes threshold inhibition, dispersion, solubilization and particle size reduction.

The word "scale" includes any scale that forms in an aqueous solution. Examples include calcium carbonate, calcium sulfate, calcium phosphate, calcium phosphonate (including calcium hydroxyethylidene diphosphonic acid), calcium oxalate, barium sulfate, silica, alluvial deposits, metal oxides (including iron oxide), and metal hydroxides, (including magnesium hydroxide).

The phrase "aqueous system" includes any system containing water, for example cooling systems, boilers, desalination plants, gas scrubbers, blast furnaces, sewage sludge thermal conditioning equipment, reverse osmosis equipment, sugar evaporators, paper processing plants and mining circuits.

The polymers used in the method of this invention may be prepared from any unsaturated carboxylic acid or salt, any unsaturated sulfonic acid or salt, and any quaternary ammonium compound, including mixtures of such compounds. Examples of suitable carboxylic acid compounds include acrylic acid, methacrylic acid, α-haloacrylic acids, maleic acid, itaconic acid, vinylacetic acid, allylacetic acid, fumaric acid, β-carboxyethyl acrylate, their salts, and mixtures of such compounds. The preferred carboxylic acids are acrylic acid, methacrylic acid, β-carboxyethylacrylate, maleic acid, fumaric acid and itaconic acid, and their salts, acrylic acid, methacrylic acid and their salts being especially preferred. Examples of suitable sulfonic acid compounds include 2-acrylamido-2-methylpropyl-sulfonic acid, 2-methacrylamido-2-methylpropylsulfonic acid, styrenesulfonic acids, vinylsulfonic acid, sulfoalkyl acrylates or methacrylates, allyl sulfonic acid, methallyl sulfonic acid, 3-methacrylamido-2-hydroxypropyl sulfonic acid, sulfonic acid acrylate, their salts, and mixtures of such compounds. The preferred sulfonic compounds are 2-acrylamido-2-methylpropylsulfonic acid, 2-methacrylamido-2-methylpropylsulfonic acid, allyl sulfonic acid, styrenesulfonic acid and vinylsulfonic acid and their salts. The especially preferred sulfonic acids are 2-acrylamido-2-methylpropylsulfonic acid and 2-methacrylamido-2-methylpropylsulfonic acid and their salts. Examples of suitable quaternary ammonium compounds include dimethyldiallyl ammonium chloride (DMDAAC), diethyldiallyl ammonium chloride (DEDAAC), methacryloyloxyethyl trimethyl ammonium chloride (METAC), methacryloxyethyl trimethyl ammonium methosulfate (METAMS), acryloyloxyethyl trimethyl ammonium chloride (AETAC), methacrylamido propyl trimethyl ammonium chloride (MAPTAC), acryloyloxyethyl trimethyl ammonium methosulfate (AETAM), acrylamido methyl propyl trimethyl ammonium chloride (AMPTAC), and acrylamido methyl butyl trimethyl ammonium chloride (AMBTAC). The preferred quaternary ammonium compounds are DMDAAC, DEDAAC and METAC, particularly DMDAAC and DEDAAC. Non-ionic monomers (such as acrylamide, methacrylamide and acrylonitrile) may also be present in the polymers, but terpolymers are preferred.

The polymers may be prepared by mixing the monomers preferably in the presence of a free radical initiator. Any free radical initiator may be used. Examples include peroxides, azo initiators and redox systems. The polymerization may also be initiated photochemically. The preferred catalysts are sodium persulfate and sodium metabisulfite or a mixture of ammonium persulfate and any azo type initiator, such as 2,2'-azobis-(2,4-dimethyl-4-methoxyvaleronitrile).

The polymerization may be conducted by any of a variety of procedures, for example, in solution, suspension, bulk and emulsions.

The reaction temperature is not critical. The reaction will generally occur between 10 and 100°C, preferably 40 to 60°C. It is generally impractical to run the reaction below room temperature because the reaction is too slow. Above a temperature of 60°C, the molecular weight of the polymer tends to decrease. The reaction, depending on the temperature, generally takes from 5 minutes to 12 hours. Measuring for residual monomer will verify when the reaction is complete.

The pH of the reaction mixture is not critical. The pH is generally in the range of 3.0 to 9.0.

The percent solids in the reaction mixture is not critical. The preferred range is 1 to 50%, by weight, solids.

The polymers are usually identified by intrinsic viscosity. The intrinsic viscosity should be 0.05 to 2.5, preferably 0.05 to 0.5 dl/g, in 1.0 $M$ sodium chloride (measured on a 75 Cannon Ubbelohde capillary viscometer).

## Examples

The following abbreviations are used in the examples and are defined as indicated:

AA = acrylic acid.

AMPS = 2-acrylamido-2-methylpropylsulfonic acid.

DMDAAC = dimethyldiallyl ammonium chloride.

METAC = methacryloyloxyethyl trimethyl ammonium chloride.

MAPTAC = methacrylamido propyl trimethyl ammonium chloride.

*Polymerization*

The monomers were mixed in the ratios indicated in the Tables so as to make up 28% of the total solution weight. Sufficient amount of sodium hydroxide was added to neutralize the solution to pH 4.5. Sodium persulfate and sodium metabisulfite, as catalyst, were added to the neutralized monomer solution at 0.8 and 1.5 percent of the solution weight respectively. The initiation temperature was 25°C. The polymerization was allowed to run to completion which usually took between 15 and 30 minutes at which time the reaction temperature had peaked between 80—90°C.

Intrinsic viscosities were measured in 1 $M$ NaCl in a size 75 Cannon Ubbelohde capillary viscometer. Measurements at 2.0, 1.0, and 0.5 g/dl were taken. The Huggins equation was used to determine the intrinsic viscosity.

*Calcium Carbonate Inhibition*

Calcium carbonate stabilization was determined by adding a given concentration of the polymers of the instant invention to a solution containing 200 mg/l $Ca^{+2}$ (as $CaCl_2$), 600 mg/l $HCO_3^{-1}$ (as $NaHCO_3$) at pH 8.0 ± 0.1. The solution was stored in a stagnant flask for 24 hours at 60°C (140°F). Poor performing samples allow a precipitate of $CaCO_3$ to form. To remove these 'solids' the solution is filtered through a 2.5 micron filter. The inhibitor effectiveness under these conditions is obtained by determination of the soluble calcium content of the test solutions using the Schwarzenbach titration method (EDTA, chrome black T indicator). The solution calcium ion concentration in the absence of inhibitor is equivalent to 0% scale inhibition. The percent inhibition for a given test is determined by:

$$\frac{Ve - Vo}{Vt - Vo} \times 100 = \% \text{ inhibition}$$

Vo = the Schwarzenbach titration volume with no inhibitor present (control)
Vt = the Schwarzenbach titration volume when no precipitation occurs
Ve = the experimental Schwarzenbach titration volume when inhibitors are present in the test solution.

*Calcium Sulfate Inhibition*

Calcium sulfate stabilization was determined by adding a given concentration of the polyampholyte of the instant invention to a solution containing 4800 mg/l $Ca^{+2}$ (as $CaCl_2$) and 2000 mg/l $SO_4^{-2}$ (as $Na_2SO_4$) at pH 7.0 ± 0.5. The solution was stored in a stagnant flask for 24 hours at 60°C (140°F). Poor performing samples allow $CaSO_4$ precipitation to occur. To remove these 'solids', the solution is filtered through a 2.5 micron filter. The inhibitor effectiveness under these conditions is obtained by determination of the soluble calcium content of the test solution using the Schwarzenbach titration method (EDTA, chrome black T indicator). The soluble calcium ion concentration in the absence of inhibitor is equivalent to 0% scale inhibition. The parent inhibition for a given test is determined by:

$$\frac{Ve - Vo}{Vt - Vo} \times 100 = \% \text{ inhibition}$$

Vo = the Schwarzenbach titration volume with no inhibitor present (control)
Vt = the Schwarzenbach titration volume when no precipitation occurs
Ve = the Experimental Schwarzenbach titration volume when inhibitors are present in the test solution.

*Calcium Phosphate Inhibition*

Calcium phosphate stabilization was determined by adding a given concentration of the polyampholytes of the instant invention to a solution containing 200 mg/l $Ca^{+2}$ (as $CaCl_2$) and 9 mg/l $PO_4^{-3}$ (as $Na_2HPO_4$). The solution is buffered at pH 8.5 by adding a 16.1% solution of $NaHCO_3:Na_2CO_3$. This solution was stored for 24 hours at 60°C (140°F). Poor performing samples allow $CaPO_4$ precipitation to occur so the stored solutions are filtered through 2.5 μ filter paper to remove 'solids'. The inhibitor effectiveness under these conditions is obtained by determination of the soluble phosphate content of the test solution using a photometric method (ascorbic acid as indicator). The range of the test is about 0 to 1.6 mg/l phosphate when the color is measured in a 1-inch cell at a wavelength of 880 nm. Higher levels can be determined by: 1) diluting the sample; 2) measuring the test color in a smaller tube or cell; and/or 3) making the color measurement at 625 nm. The percent inhibition for a given test is determined by:

$$\frac{(\text{mg/l } PO_4 \text{ in inhibitor treated flask}) - (\text{mg/l } PO_4 \text{ in control flask})}{(\text{mg/l } PO_4 \text{ theoretical } (9 \text{ mg/l})) - (\text{mg/l } PO_4 \text{ in control flask})} \times 100 = \% \text{ inhibition}$$

| Examples | Composition AA | AMPS | Quaternary Ammonium | [h] (dl/g) | CaCO₃ Inhibition (ppm Active) | | | CaSO₄ 2.5 ppm Active | CaPO₄ Inhibition (ppm Active) | |
|---|---|---|---|---|---|---|---|---|---|---|
| | | | | | 1.5 | 2.0 | 2.5 | | 5.0 | 10.0 |
| DMDAAC | | | | | | | | | | |
| 1 | 70 | 20 | 10 | 0.29 | 58 | 72 | 72 | 86 | 9 | 100 |
| 2 | 70 | 10 | 20 | 0.12 | 89 | 100 | 100 | 84 | 1 | 100 |
| 3 | 60 | 30 | 10 | 0.23 | 56 | 68 | 68 | — | 24 | 100 |
| 4 | 60 | 20 | 20 | 0.15 | 100 | 100 | 100 | 52 | 0 | 100 |
| 5 | 60 | 10 | 30 | 0.18 | 88 | 88 | 91 | — | 8 | 51 |
| 6 | 50 | 40 | 10 | | 44 | 44 | 63 | | 11 | 100 |
| 7 | 50 | 25 | 25 | | 60 | 60 | 74 | | 4 | 100 |
| 8 | 50 | 10 | 40 | | 79 | 90 | 92 | | 1 | 13 |
| METAC | | | | | | | | | | |
| 9 | 60 | 20 | 20 | 0.24 | 60 | 62 | 62 | | 6 | 77 |
| MAPTAC | | | | | | | | | | |
| 10 | 60 | 20 | 20 | 0.27 | 27 | 33 | 40 | | 6 | 84 |

## Claims

1. A method of inhibiting corrosion and the formation and deposition of scale in aqueous systems, that comprises adding to the system at least 0.1 ppm of a water-soluble polymer having an intrinsic viscosity of 0.05 to 2.5 dl/g, (0.005 to 0.25 m³/Kg) prepared from:

(a) 50 to 90% by weight of an unsaturated carboxylic acid or its salt or a mixture of such carboxylic acid compounds;

(b) 5 to 40% by weight of an unsaturated sulfonic acid or its salt or a mixture of such sulfonic acid compounds; and

(c) 5 to 40% by weight of an unsaturated quaternary ammonium compound or a mixture of such compounds.

2. A modification of a method as claimed in Claim 1, in which the polymer is also prepared from non-ionic monomers.

3. A method as claimed in claim 1, in which the polymer is prepared from:

(a) 60 to 75% by weight of the unsaturated carboxylic acid or its salt;

(b) 5 to 25% by weight of the unsaturated sulfonic acid or its salt; and

(c) 10 to 25% by weight of an unsaturated quaternary ammonium compound.

4. A method as claimed in any preceding claim in which the polymer has an intrinsic viscosity of 0.05 to 0.5 dl/g (0.005 to 0.05 m³/Kg).

5. A method as claimed in any preceding claim in which from 0.1 to 25 ppm of polymer is added.

6. A method as claimed in any preceding claim in which:

(a) the carboxylic compound is acrylic acid, methacrylic acid, α-haloacrylic acid, itaconic acid, vinylacetic acid, allylacetic acid, β-carboxyethylacrylate, fumaric acid, or maleic acid, or a salt thereof;

(b) the sulfonic compound is 2-acrylamido-2-methyl propyl sulfonic acid, allyl sulfonic acid, styrene sulfonic acid or vinyl sulfonic acid, or a salt thereof; and

(c) the quaternary ammonium compound is dimethyl diallyl ammonium chloride, diethyl diallyl ammonium chloride, methacryloyloxyethyl trimethyl ammonium chloride, methacrylamido propyl trimethyl ammonium chloride, methacryloxyethyl trimethyl ammonium methosulfate, acryloyloxyethyl trimethyl ammonium chloride or acryloyloxyethyl trimethyl ammonium methosulfate.

7. A method as claimed in Claim 6, in which the carboxylic compound is acrylic or methacrylic acid or a salt thereof, the sulfonic compound is 2-acrylamido-2-methylpropylsulfonic acid or 2-methacrylamido-2-methylpropylsulfonic acid or a salt thereof, and the quaternary ammonium compound is dimethyl diallyl ammonium chloride or diethyl diallyl ammonium chloride.

8. A water-soluble polymer having an intrinsic viscosity of 0.05 to 2.5 dl/g (0.005 to 0.25 m$^3$/Kg) prepared from:

(a) 50 to 90% by weight of an unsaturated carboxylic compound that is acrylic acid, methacrylic acid, a salt of either or a mixture of two or more such compounds;

(b) 5 to 40% by weight of an unsaturated sulfonic compound that is 2-acrylamido-2-methylpropylsulfonic acid, 2-methyacryl-amido-2-methylpropyl-sulfonic acid, a salt of either or a mixture of two or more such compounds; and

(c) 5 to 40% by weight of dimethyl diallyl ammonium chloride or diethyl diallyl ammonium chloride or a mixture of them.

9. A polymer as claimed in Claim 8 prepared from:

(a) 60 to 75% by weight of acrylic acid or its salt;

(b) 5 to 25% by weight of 2-acrylamido-2-methylpropyl sulfonic acid, and

(c) 10 to 25% by weight of dimethyl diallyl ammonium chloride.

10. A polymer as claimed in Claim 8 or 9 having an intrinsic viscosity of 0.05 to 0.5 dl/g (0.005 to 0.05 m$^3$/Kg).

11. A modification of a polymer as claimed in Claim 8, that has been prepared from non-ionic monomers in addition to those specified.

**Patentansprüche**

1. Ein Verfahren zur Hemmung von Korrosion und der Bildung und Ablagerung von Kesselstein in wässerigen Systemen, umfassend das Zusetzen von wenigstens 0,1 TpM eines wasserlöslichen Polymers mit einer grundmolaren Viskositätszahl von 0,05 bis 2,5 dl/g (0,005 bis 0,25 m$^3$/kg) zu dem System, welches Polymer aus:

(a) 50 bis 90 Gew.-% einer ungesättigten Carbonsäure oder ihres Salzes, oder eines Gemisches solcher Carbonsäureverbindungen;

(b) 5 bis 40 Gew.-% einer ungesättigten Sulfonsäure oder ihres Salzes, oder eines Gemisches solcher Sulfonsäureverbindungen; und

(c) 5 bis 40 Gew.-% einer ungesättigten quarternären Ammoniumverbindung, oder eines Gemisches solcher Verbindungen, hergestellt worden ist.

2. Eine Modifikation eines wie in Anspruch 1 beanspruchten Verfahrens, wobei das Polymer auch aus nicht-ionischen Monomeren hergestellt ist.

3. Ein Verfahren wie in Anspruch 1 beansprucht, wobei das Polymer aus:

(a) 60 bis 75 Gew.-% der ungesättigten Carbonsäure oder ihres Salzes;

(b) 5 bis 25 Gew.-% der ungesättigten Sulfonsäure oder ihres Salzes; und

(c) 10 bis 25 Gew.-% der ungesättigten quaternären Ammoniumverbindung hergestellt worden ist.

4. Ein Verfahren wie in einem der vorhergehenden Ansprüche beansprucht, wobei das Polymer eine grundmolare Viskositätszahl von 0,05 bis 0,5 dl/g (0,005 bis 0,05 m$^3$/kg) hat.

5. Ein Verfahren wie in einem der vorhergehenden Ansprüche beansprucht, wobei 0,1 bis 25 TpM des Polymers zugesetzt werden.

6. Ein Verfahren wie in einem der vorhergehenden Ansprüche beansprucht, wobei

(a) die Carbonsäureverbindung Acrylsäure, Methacrylsäure, α-Halogenacrylsäure, Itaconsäure, Vinylessigsäure, Allylessigsäure, β-Carboxyethylacrylat, Fumarsäure oder Maleinsäure, oder ein Salz davon, ist;

(b) die Sulfonsäureverbindung 2-Acrylamido-2-methylpropylsulfonsäure, Allylsulfonsäure, Styrolsulfonsäure oder Vinylsulfonsäure, oder ein Salz davon, ist; und

(c) die quaternäre Ammoniumverbindung Dimethyldiallylammoniumchlorid, Diethyldiallyl-ammoniumchlorid, Methacryloyloxyethyltrimethylammoniumchlorid, Methacrylamidopropyl-trimethylammoniumchlorid, Methacryloxyethyltrimethylammoniummethosulfat, Acryloyloxyethyl-trimethylammoniumchlorid oder Acryloyloxyethyltrimethylammoniummethosulfat ist.

7. Ein Verfahren wie in Anspruch 6 beansprucht, wobei die Carbonsäureverbindung Acrylsäure oder Methacrylsäure, oder ein Salz davon, ist, die Sulfonsäureverbindung 2-Acrylamido-2-methylpropylsulfonsäure, 2-Methacrylamido-2-methylpropylsulfonsäure, oder ein Salz davon, ist, und die quaternäre Ammoniumverbindung Dimethyldiallylammoniumchlorid oder Diethyldiallylammoniumchlorid ist.

8. Ein wasserlösliches Polymer mit einer grundmolaren Viskositätszahl von 0,05 bis 2,5 dl/g (0,005 bis 0,25 m$^3$/kg), hergestellt aus:

(a) 50 bis 90 Gew.-% einer ungesättigten Carbonsäureverbindung, nämlich Acrylsäure, Methacrylsäure, einem Salz einer solchen Säure oder einem Gemisch aus zweien oder mehreren solcher Verbindungen;

(b) 5 bis 40 Gew.-% einer ungesättigten Sulfonsäureverbindung, nämlich 2-Acrylamido-2-methylpropylsulfonsäure, 2-Methacrylamido-2-methylpropylsulfonsäure, einem Salz einer solchen Säure oder einem Gemisch aus zweien oder mehreren solcher Verbindungen; und

(c) 5 bis 40 Gew.-% Dimethyldiallylammoniumchlorid oder Diethyldiallylammoniumchlorid, oder einem Gemisch von diesen.

9. Ein Polymer wie in Anspruch 8 beansprucht, hergestellt; aus

(a) 60 bis 75 Gew.-% Acrylsäure oder ihres Salzes;

(b) 5 bis 25 Gew.-% 2-Acrylamido-2-methylpropylsulfonsäure, und

(c) 10 bis 25 Gew.-% Dimethyldiallylammoniumchlorid.

10. Ein Polymer wie in Anspruch 8 oder 9 beansprucht, das eine grundmolare Viskositätszahl von 0,05 bis 0,5 dl/g (0,005 bis 0,05 m³/kg) hat.

11. Eine Modifikation eines wie in Anspruch 8 beanspruchten Polymers, welches, zusätzlich zu den angeführten, aus nicht-ionischen Monomeren hergestellt worden ist.

## Revendications

1. Procédé d'inhibition de la corrosion et de la formation et du dépôt de tartre dans des systèmes aqueux, qui comprend le fait d'ajouter au système au moins 0,1 ppm d'un polymère hydrosoluble ayant une viscosité intrinsèque de 0,05 à 2,5 dl/g (0,005 à 0,25 m³/kg) préparé à partir de:

(a) 50 à 90% en poids d'un acide carboxylique insaturé ou de son sel ou d'un mélange de tels composés d'acides carboxyliques;

(b) 5 à 40% en poids d'un acide sulfonique insaturé ou de son sel ou d'un mélange de tels composés d'acides sulfoniques; et

(c) 5 à 40% en poids d'un composé insaturé d'ammonium quaternaire ou d'un mélange de tels composés.

2. Modification d'un procédé selon la revendication 1, selon laquelle on prépare également le polymère à partir de monomères non ioniques.

3. Procédé selon la revendication 1, dans lequel on prépare le polymère à partir de:

(a) 60 à 75% en poids d'acide carboxylique insaturé ou de son sel;

(b) 5 à 25% en poids d'acide sulfonique insaturé ou de son sel; et

(c) 10 à 25% en poids d'un composé insaturé d'ammonium quaternaire.

4. Procédé selon l'une quelconque des revendications précédentes, dans lequel le polymère présente une viscosité intrinsèque de 0,05 à 0,5 dl/g (0,005 à 0,05 m³/kg).

5. Procédé selon l'une quelconque des revendications précédentes, selon lequel on ajoute de 0,1 à 25 ppm de polymère.

6. Procédé selon l'une quelconque des revendications précédentes, dans lequel:

(a) le composé carboxylique est l'acide acrylique, l'acide méthacrylique, un acide alpha-haloacrylique, l'acide itaconique, l'acide vinylacétique, l'acide allylacétique, l'acrylate de bêta-carboxyéthyle, l'acide fumarique ou l'acide maléique ou un sel de ceux-ci;

(b) le composé sulfonique est l'acide 2-acrylamido-2-méthylpropylsulfonique, l'acide allylsulfonique, l'acide styrènesulfonique ou l'acide vinylsulfonique ou un sel de ceux-ci; et

(c) le composé d'ammonium quaternaire est le chlorure de diméthyldiallylammonium, le chlorure de diéthyldiallylammonium, le chlorure de méthacryloyloxyéthyltriméthylammonium, le chlorure de méthacrylamidopropyltriméthylammonium, le méthosulfate de méthacryloxyéthyltriméthylammonium, le chlorure d'acyloyloxyéthyltriméthylammonium ou le méthosulfate d'acryloyloxyéthyltriméthylammonium.

7. Procédé selon la revendication 6, dans lequel le composé carboxylique est l'acide acrylique ou méthacrylique ou un sel de celui-ci, le composé sulfonique est l'acide 2-acrylamido-2-méthylpropylsulfonique ou l'acide 2-méthacrylamido-2-méthylpropylsulfonique ou un sel de ceux-ci et le composé d'ammonium quaternaire est le chlorure de diméthyldiallylammonium ou le chlorure de diéthyldiallylammonium.

8. Polymère hydrosoluble ayant une viscosité intrinsèque de 0,05 à 2,5 dl/g (0,005 à 0,25 m³/kg) préparé à partir de:

(a) 50 à 90% en poids d'un composé carboxylique insaturé qui est l'acide acrylique, l'acide méthacrylique, un sel de l'un ou de l'autre ou un mélange de deux ou plusieurs de tels composés;

(b) 5 à 40% en poids d'un composé sulfonique insaturé qui est l'acide 2-acrylamido-2-méthylpropylsulfonique, l'acide 2-méthylacrylamido-2-méthylpropylsulfonique, un sel de l'un ou de l'autre ou un mélange de deux ou plusieurs de tels composés; et

(c) 5 à 40% en poids de chlorure de diméthyldiallylammonium ou de chlorure de diéthyldiallylammonium ou d'un mélange de ceux-ci.

9. Polymère selon la revendication 8, qui est préparé à partir de:

(a) 60 à 75% en poids d'acide acrylique ou d'un sel de celui-ci;

(b) 5 à 25% en poids d'acide 2-acrylamido-2-méthylpropylsulfonique, et

(c) 10 à 25% en poids de chlorure de diméthyldiallylammonium.

10. Polymère selon la revendication 8 ou 9, qui présente une viscosité intrinsèque de 0,05 à 0,5 dl/g (0,005 à 0,05 m³/kg).

11. Modification d'un polymère selon la revendication 8, qui a été préparé à partir de monomères non ioniques en plus de ceux qui ont été spécifiés.